Europäisches Patentamt

European Patent Office

Office européen des brevets

(11) Veröffentlichungsnummer: **0 476 363 A1**

## (12) EUROPÄISCHE PATENTANMELDUNG

(21) Anmeldenummer: **91114305.5**

(22) Anmeldetag: **26.08.91**

(51) Int. Cl.⁵: **B01D 69/14**

(30) Priorität: **17.09.90 DE 4029433**

(43) Veröffentlichungstag der Anmeldung:
**25.03.92 Patentblatt 92/13**

(84) Benannte Vertragsstaaten:
**DE FR GB IT NL**

(71) Anmelder: **Degussa Aktiengesellschaft**
**Weissfrauenstrasse 9**
**W-6000 Frankturt am Main 1(DE)**

(72) Erfinder: **Kärger, Jörg, Dr.**
**Karl-Tauchnik-Strasse 23**
**W-0-7010 Leipzig(DE)**
Erfinder: **Pfeifer, Harry, Dr.**
**Leninstrasse 163 163**
**W-0-7027 Leipzig(DE)**
Erfinder: **Sextl, Elfriede, Dr.**
**Am Frohnbügel 11**
**W-8752 Geiselbach(DE)**

(54) **Zeolithmembran.**

(57) Eine Zeolithmembran, in der die Zeolithkristalle gegebenenfalls mit ihrer Längsachse achsenparallel in den Öffnungen einer Matrix bildenden Substanz ausgerichtet sind, wird hergestellt, in dem man Zeolithkristalle in die Öffnungen der die Matrix bildenden Substanz hineingibt und gegebenenfalls die Öffnungen verschließt.

EP 0 476 363 A1

Die Erfindung betrifft eine Zeolithmembran.

Gegenstand der Erfindung ist eine Zeolithmembran, welche dadurch gekennzeichnet ist, daß Zeolithkristalle gegebenenfalls mit ihrer Längsachse achsenparallel in den Öffnungen einer Matrix bildenden Substanz ausgerichtet sind.

Ein weiterer Gegenstand der Erfindung ist ein Verfahren zur Herstellung der Zeolithmembran, welches dadurch gekennzeichnet ist, daß man Zeolithkristalle in die Öffnungen der die Matrix bildenden Substanz hineingibt und gegebenenfalls die Öffnungen verschließt.

Die erfindungsgemäße Zeolithmembran kann bei chemischen Reaktionen oder physikalischen Trennverfahren als Membran eingesetzt werden. Ein derartiger Einsatz erfolgt zum Beispiel bei der Trocknung von organischen Substanzen, die mit Wasser ein azeotropes Gemisch bilden, zum Beispiel bei der Trocknung von Äthanol.

Beispiele

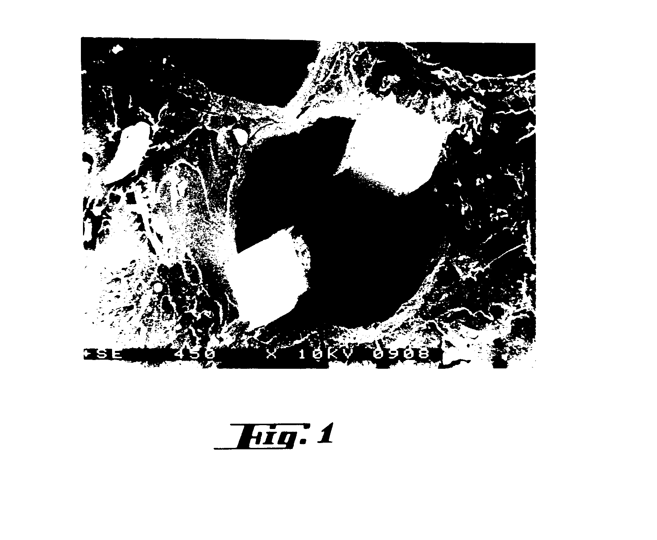

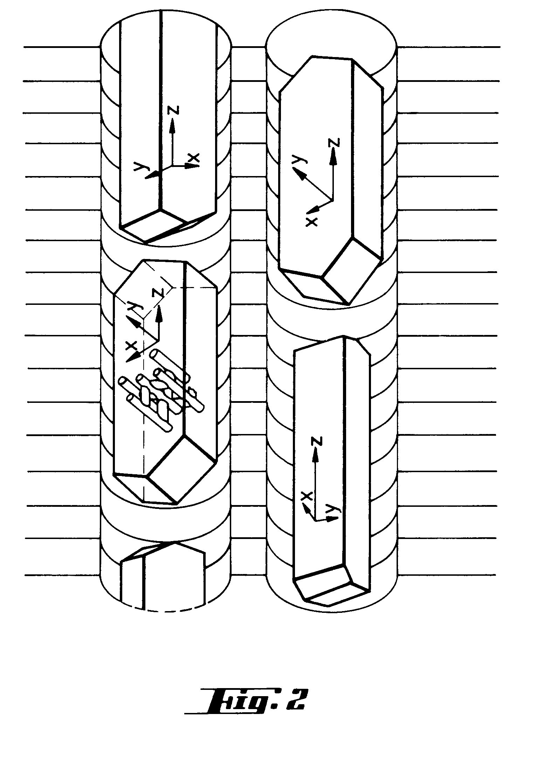

Zeolith ZSM-5-Kristalle werden in einem Satz paralleler Röhren mit einem inneren Durchmesser von 100 bis 200 $\mu$m gefüllt. (vgl. Figuren 1 und 2).

Der Satz paralleler Röhren wird hergestellt, indem man ein Bündel von Polymerkapillaren in Polyurethan einbettet und in schmale Scheiben mit einer Dicke von 5 mm schneidet. Auf diese Weise können 80 mg Zeolith ZSM-5-Kristalle in einem Kubikzentimeter untergebracht werden.

Vor der Einbringung des Zeolithpulvers werden die Polyurethanscheiben bei einer Temperatur von 100 °C über einen Zeitraum von 24 Stunden erhitzt und evakuiert. Dadurch wird eine Zerstörung der Zeolithkristalle bei der Aktivierung innerhalb der Kapillarröhren vermieden.

**Patentansprüche**

1. Zeolithmembran, dadurch gekennzeichnet, daß Zeolithkristalle gegebenenfalls mit ihrer Längsachse achsenparallel in den Öffnungen einer Matrix bildenden Substanz ausgerichtet sind.

2. Verfahren zur Herstellung der Zeolithmembran nach Anspruch 1, dadurch gekennzeichnet, daß man Zeolithkristalle in die Öffnungen der die Matrix bildenden Substanz hineingibt und gegebenenfalls die Öffnungen verschließt.

3. Verwendung der Zeolithmembran als Membran bei chemischen Reaktionen oder physikalischen Trennverfahren.

Fig. 1

Fig. 2

**Europäisches Patentamt**

# EUROPÄISCHER RECHERCHENBERICHT

Nummer der Anmeldung

**EP 91 11 4305**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 909 642 (P.C. VAN DER KUIP) <br> – – – | | B 01 D 69/14 |
| A | US-A-2 924 630 (R.N. FLECK) <br> * Insbesonderes Figur 6, Spalte 9, Zeilen 8-48 * <br> – – – | | |
| A | DE-A-2 042 960 (N.V. PHILIPS' GLOEILAMPENFABRIE-KEN) <br> * Insbesonderes Seite 5 * <br> – – – | | |
| A | JOURNAL OF MEMBRANE SCIENCE, Band 22, 1985, Seiten 137-146; D.L. WERNICK et al.: "Permeation through a single crystal of zeolite NaX" <br> – – – – – | | |

| | RECHERCHIERTE SACHGEBIETE (Int. Cl.5) |
|---|---|
| | B 01 D 69/00 <br> B 01 D 71/00 |

Der vorliegende Recherchenbericht wurde für alle Patentansprüche erstellt

| Recherchenort | Abschlußdatum der Recherche | Prüfer |
|---|---|---|
| Den Haag | 29 Oktober 91 | DEVISME F.R. |